# EUROPEAN PATENT APPLICATION

(11) **EP 2 437 160 A1**
(43) Date of publication of application: **04.04.2012**
(21) Application number: 10290532.0
(22) Date of filing: 04.10.2010
(51) Int. Cl.: G06F 7/72

(54) **Blinding of modular exponentiation**

(71) Applicant: Nagravision S.A., 1033 Cheseaux-sur-Lausanne (CH)
(72) Inventor: Régis, Bevan, 75009 Paris (FR)
(74) Representative: Leman Consulting S.A.

(57) **Abstract**

The present invention proposes a method for executing a blinded modular exponentiation, based on a window method with a window size of k bits so using 2^{k} pre-calculated variables (Yᵢ = Xⁱ mod N for i = 0 to 2^{k}-1), on input data X of n bits to obtain output data S of n bits, S = X^{d} mod N, where d is the exponent of size m bits and N is the modulus of n bits, comprising the steps of:
● blinding the pre-calculated variables by a blinding value B₁ being a pseudo-random variable of the size of the modulus (n bits) and lower than the modulus (Yᵢ=Y_{¡} × B₁ mod N for i = 0 to 2^{k}-1)
● executing the modular exponentiation with the blinded pre-calculated variables, to obtain an intermediate result (A),
● unblinding the intermediate result by a unblinding value C₁=(B₁^{g})⁻¹ mod N where g equals the concatenation of m/k times the value "1" coded on k bits, to obtain the output data S.

## Description

### FIELD OF THE INVENTION

The invention relates to software and data cryptography. In particular, the invention relates to a method for hiding intermediate results of a modular exponentiation.

### BACKGROUND OF THE INVENTION

Till not so long ago, cryptography was concerned only by the protection of the communication of the message into a hostile environment. In classical scheme (a.k.a. black-box model), the attacker had only access to the inputs of the decryption device. With the emergence of Pay-TV, digital contents protected by DRM (movie, music in smart-phone, personal computer or in CD/DVD), attacker has now physically access to the decryption device and its outputs.

In 1996 appeared the notion of fault analysis: when submitting the decryption device to abnormal conditions (wrong input, abnormal temperature, strong electromagnetic radiations...), the decryption algorithm can output faulty plaintext which gives information about the key used in the decryption device. See "On the Importance of Checking Cryptographic Protocols for Faults" of Dan Boneh, Richard A. DeMillo and Richard J. Lipton in the proceedings of Eurocrypt 1997.

In the same year appeared the notion of side-channel attacks: the physical signals (timing of processing, power consumption, electromagnetic radiations...) that are output by the decryption device during the processing of the decryption can leak information (side-channel information) about the internal variables of the decryption algorithm. From this internal variables and statistic analysis, the attacker can retrieve information about the key used in the decryption device. See "Timing Attacks on Implementations of Diffie-Hellman, RSA, DSS, and Other Systems" of Paul C. Kocher in the proceedings of Crypto 1996.

Fault analysis and side-channel analysis belong to the grey-box model: the attacker has a limited knowledge about the implementation of the cryptographic algorithm and about its internal data. These attacks were successfully used to retrieve the keys and code source of smartcards used in pay-TV systems.

For music and movie on personal computer or on CD/DVD, the content keys are protected by obfuscation of software (DRM) because it is much less expensive than to distribute smartcards. The hostile environment is worst than the grey-box model, the attacker has a full access of the inner part of the software: this is the white-box model. In 2002 appeared the concept of White-Box Cryptography. White-Box Cryptography is an obfuscation technique intended to implement cryptographic primitives in such a way, that even an adversary who has full access to the implementation and its execution platform, is unable to extract key information. See "White-Box Cryptography and an AES Implementation" of Stanley Chow, Philip A. Eisen, Harold Johnson, and Paul C. van Oorschot in the proceedings of the 9th International Workshop on Selected Areas in Cryptography (SAC 2002).

As described in the thesis of Brecht Wyseur about White-Box Cryptography, a countermeasure that is efficient against attacks in the white-box model is also efficient against attacks in the grey-box model.

**Exponentiation** is a mathematical operation, written as *b^{e}*, involving two numbers, the **base** *a* and the **exponent** e. When *e* is a positive integer, exponentiation corresponds to repeated multiplication; in other words, a product of e factors of *b*: *b× b...×b* **Modular exponentiation** is a type of exponentiation performed over a modulus. Doing a "modular exponentiation" means calculating the remainder when dividing by a positive integer m (called the modulus) a positive integer b (called the base) raised to the e-th power (e is called the exponent). In other words, problems take the form where given base b, exponent e, and modulus m, one wishes to calculate c such that: *c* = *b^{e} mod m* Some general-purpose exponentiation algorithms referred to as *repeated square-and-multiply* algorithms are described in "Handbook of applied cryptography" of A. Menezes, P. van Oorshot and S. Vanstone.

The first one is to analyse the exponent bit by bit and perform multiplication according to the value of each bit.

### Basic binary modular exponentiation

INPUT: an integer g of n bits and integer e of t+1 bits i.e. e= (eₜeₜ₋₁... e₁e₀) where eᵢ is the i-th least significant bit of e, m the modulus of n bits.

OUTPUT: g^{e} mod m
1. A=1.
2. For i from t down to 0 do the following:
   2.1 A=A × A mod m.
   2.2 If eᵢ = 1, then A=A × g mod m
3. Return(A)

The binary exponentiation can be speed up by analysing the exponent by group of k bits. This method is also known as the window method, where the window size is k.

### Modular exponentiation with window method

INPUT: g of n bits, e of (t+1)×b bits i.e e = (eₜeₜ₋₁...e₁e₀)b, where b = 2^{k} for some k > 1 and a modulus m of n bits

OUTPUT: g^{e} mod m
*1. Precomputation.*
   1.1 G₀=1.
   1.2 For i from 1 to (2^{k} - 1) do: Gᵢ = Gᵢ₋₁ × g. (Thus, Gᵢ = gⁱ.)
2. A = 1.
3. For i from t down to 0 do the following:
   3.1 B=A² mod m, A = B^{k} mod m
   3.2 j=eᵢ, A=A×Gⱼ.
4. Return(A)

Modular exponentiation is involved in some important cryptographic protocols for key exchange or encryption or signature (Diffie-Hellman, ElGamal, RSA, DSS...).

For modular exponentiation, if the exponent is properly protected by obfuscation techniques, the attacker will try to have information about the key by monitoring the intermediate results of the modular exponentiation. The aim of the present invention is to provide a way to blind the intermediate results of the modular exponentiation in such a way that the blinding method is more difficult to bypass that the blinding method described in "Timing Attacks on Implementations of

Diffie-Hellman, RSA, DSS, and Other Systems" of Paul C. Kocher in the proceedings of Crypto 1996.

### SUMMARY OF THE INVENTION

The present invention proposes a method for executing a blinded modular exponentiation, based on a window method with a window size of k bits so using 2^{k} pre-calculated variables (Yᵢ = Xⁱ mod N for i = 0 to 2^{k}-1), on input data X of n bits to obtain output data S of n bits, S = X^{d} mod N, where d is the exponent of size m bits and N is the modulus of n bits, comprising the steps of:
● blinding the pre-calculated variables by a blinding value B₁ being a pseudo-random variable of the size of the modulus (n bits) and lower than the modulus (Yᵢ=Yᵢ × B₁ mod N for i = 0 to 2^{k}-1)
● executing the modular exponentiation with the blinded pre-calculated variables, to obtain an intermediate result (A),
● unblinding the intermediate result by a unblinding value C₁ = (B₁^{g})⁻¹ mod N where g equals the concatenation of m/k times the value "1" coded on k bits, to obtain the output data S.

Likewise, this invention describes a method to blind input data X having n bits, in a modular exponentiation cryptographic engine using the window method, in an open software environment, using a key which comprises an exponent d having m bits and a modulus N having n bits, said modular exponentiation cryptographic engine comprising pre-calculation and exponentiation, said exponentiation using as input the pre-calculated variables Yᵢ (Yᵢ = Xⁱ mod N) in which i varies between 0 to 2^{k}-1 and **k** represent the size of a window to analyze the exponent,

Using a register A of n bits, initialized with the value 1, for temporary storage of intermediate results of the exponentiation algorithm.

Using a register C of n bits, initialized with the value 1, for temporary storage of the last used random value,

Using a register v of log(m) bits, initialized with the value m/k
- for j= m/k to 1, extracting k bits of the key d starting by the bit j×k,

Determining a blinding condition (0/1) b based on a function **f1** of j,

If the blinding condition is set, executing:
- updating a pseudorandom variable B of n bits
- for i = 0 to 2^{k}-1 , replacing the Yᵢ by Yᵢ x (B mod N),
- for i = 0 to 2^{k}-1 , replacing Yᵢ by Yᵢ × (C⁻¹ mod N),
- Replacing A by A x C^{g} in which g is a function of (v-j) (i.e. g = -f2(v-j), where f2(r) is a number of k x r bits build from the concatenation of r times the number 1 coded on k bits e.g. if r = 4 and k = 2, then f2(r=4) = "01010101" in binary, f2(4) = 0x55 in hexadecimal)
- Loading the register C with the value of B,
- Loading the register v with the value of j

Replacing the value A by (A^{K} mod N ×Y_{dj} mod N), dj representing the j^{th} word of k bits of the exponent d when counting from the least significant bit to the most significant bit and K = 2^{k}

The advantage of this blinding method is that the blinding is involved in several computations (as many computations as the size of the windows), so it is more difficult to bypass the blinding by one fault attack or one software modification.

Another advantage is the renewability of the blinding inside the algorithm which makes more difficult a fault attack or a software modification to bypass the blinding.

Another advantage is that a hacker can not find a specific function T such that submitting T(X) as input of the modular exponentiation will make the intermediate results stored in A independent of the blinding variable B, even if B is a known constant.

The overhead of the countermeasure if the unblinding steps are not pre-computed, compared to the classical exponentiation algorithm, is an exponentiation with the same length than the input exponent d and as many inversions as the number of blinding updates.

According to a particular embodiment, the claimed method can be simplified (in case of constraints on speed) by blinding the pre-calculated variables once at the very beginning of the exponentiation algorithm and then removing the blinding at the end of the exponentiation. The overhead of the countermeasure is then one exponentiation with the same length than the input exponent d and only one inversion.

According to a particular embodiment, when the modular exponentiation algorithm is used for RSA computation with a private key d (which is a long exponent), the claimed method can be speed up according to the followings steps:
● pre-computing e' = g⁻¹ mod (p-1) ×(q-1) where g equals the concatenation of m/k times the value "1" coded on k bits.
● blinding of the pre-calculated variables (Yᵢ = Xⁱ mod N) by a same blinding value B₂ such that B₂= B₁^{e'} mod N, B₁ being a pseudo-random variable of the size of the modulus and lower than the modulus (Yᵢ = Yᵢ × B₂ mod N for i = 0 to 2^{k}-1)
● executing the modular exponentiation with the blinded pre-calculated variables, to obtain an intermediate result (A),
● unblinding of the intermediate result by the inverse of B₁

By this way, the blinding overhead is reduced to one exponentiation with a small exponent (exponentiation by e') and one inversion.

The pseudorandom variable B can be updated by different methods. And the different values of B used between two executions of the main method can also be different.

One way to speed up the method described above is to create a link between the new and the previous blinding. In the case of the blinding value B is renewed after the processing of w windows, the blinding values used during the exponentiation is an array of sub-blocks B= (B₁, B₂, B₃,...Bₙ), the subsequent sub-block Bᵢ₊₁ being the square value modulo N of the preceding Bᵢ, each sub-block Bᵢ being a pseudo-random variable of the size of the modulus and lower than the modulus, the unblinding values used during the exponentiation is an array of sub-blocks C= (C₁, C₂, C₃...Cₙ) the subsequent sub-block Cᵢ₊₁ being the square value of the preceding Cᵢ, Cᵢ = (Bᵢ^{g})⁻¹ mod N where g equals the concatenation of w times the value "1" coded on k bits but only C₁ is computed using the inversion, the other Cᵢ being the square of the preceding.

B can be updated inside the main algorithm but the same values for B can be used between two executions of the main method: the different values of B and of C^{g} can thus be pre-computed to remove the overhead of the exponentiation and of the inversions.

In a particular case, the method comprises a step of precomputing and storing the value C^{g} where the blinding value B is a digest of all or part of the modular exponentiation code.

## Claims

1. A method for executing a blinded modular exponentiation, based on a window method with a window size of k bits so using 2^{k} pre-calculated variables (Yᵢ = Xⁱ mod N for i = 0 to 2^{k}-1), on input data X of n bits to obtain output data S of n bits, S = X^{d} mod N, where d is the exponent of size m bits and N is the modulus of n bits, comprising the steps of:
● blinding the pre-calculated variables by a blinding value B₁ being a pseudo-random variable of the size of the modulus (n bits) and lower than the modulus (Yᵢ=Yᵢ ×B₁ mod N for i=0 to 2^{k}-1)
● executing the modular exponentiation with the blinded pre-calculated variables, to obtain an intermediate result (A),
● unblinding the intermediate result by a unblinding value C₁=(B₁^{g})⁻¹ mod N where g equals the concatenation of m/k times the value "1" coded on k bits, to obtain the output data S.

2. The method according to claim 1, where the blinding value B₁ is renewed after the processing of several windows and the unblinding of the intermediate result is done by the multiplication by a variable C₁ which depends of the size of the window (k), the number of windows which were processed (w), the modulus N and the initial blinding value B₁: C₁=(B₁^{h})⁻¹ mod N where h equals the concatenation of w times the value "1" coded on k bits.

3. The method according to claim 1, where the modulus N is the product of two primes p,q of n/2 bits, comprising the steps of:
● pre-computing e' = g⁻¹ mod (p-1) ×(q-1) where g equals the concatenation of m/k times the value "1" coded on k bits.
● blinding of the pre-calculated variables (Yᵢ = X¹ mod N) by a same blinding value B₂ such that B₂= B₁^{e'} mod N, B₁ being a pseudo-random variable of the size of the modulus and lower than the modulus (Yᵢ = Yᵢ × B₂ mod N for i = 0 to 2^{k}-1)
● executing the modular exponentiation with the blinded pre-calculated variables, to obtain an intermediate result (A),
● unblinding of the intermediate result by the inverse of B₂

4. The method according to claim 1 or 2 or 3, where the blinding value B₁ is a dynamic random value which is updated at each execution of the steps of the method according to claim 1.

5. The method according to claim 2, where the blinding value is renewed after each processing of window of k bits. The blinding values used during the exponentiation is an array of sub-blocks B= (B₁, B₂, B₃,...Bₙ), the subsequent sub-block Bᵢ₊₁ being the square value modulo N of the preceding Bᵢ, each sub-block Bᵢ being a pseudo-random variable of the size of the modulus and lower than the modulus, the unblinding values used during the exponentiation is an array of sub-blocks C= (C₁, C₂, C₃...Cₙ) the subsequent sub-block Cᵢ₊₁ being the square value of the preceding Cᵢ, Cᵢ = (B¡^{h})⁻¹ mod N where h equals the concatenation of w times the value "1" coded on k bits but only C₁ is computed using the inversion, the other Cᵢ being the square of the preceding.

6. The method according to any one of the previous claims, where the blinding value B₁ is a static pseudorandom value and the unblinding value is pre-computed according to this static value once for multiple execution of the method of claim 1 or 3 or 5.

7. The method according to any one of the previous claims, precomputing and storing the value C₁ where the blinding value B₁ is a digest of all or part of the modular exponentiation code.
